# EUROPEAN PATENT SPECIFICATION

(11) **EP 0 905 013 B1**
(45) Date of publication and mention of the grant of the patent: **08.09.2004**
(21) Application number: 98115631.8
(22) Date of filing: 19.08.1998
(51) Int. Cl.: B62M 23/00, B62M 7/00

(54) **Motor-assisted bicycle**
Hilfsantrieb für Fahrräder
Bicyclette à assistance motorisée

(30) Priority: 30.09.1997 JP 26595497
(43) Date of publication of application: 31.03.1999
(73) Proprietor: Honda Giken Kogyo Kabushiki Kaisha, Minato-ku, Tokyo (JP)
(72) Inventor: Iseno, Mitsuru, K. K. Honda Gijutsu, Wako-shi, Saitama (JP); Yamaguchi, Masaaki, K. K. Honda Gijutsu, Wako-shi, Saitama (JP)
(74) Representative: Liska, Horst, Dr.-Ing.

(56) References cited:
- GB-A- 2 270 053

## Description

The present invention relates to a motor-assisted bicycle having a motor for assisting manual power.

A motor-assisted bicycle is a bicycle which is supplied with assist power in accordance with a force for stepping on pedals (stepping force) from a motor and as such a bicycle, for example, there has been a "Motor- assisted Bicycle" disclosed in Japanese Unexamined Patent Publication No. Hei 9-2370.

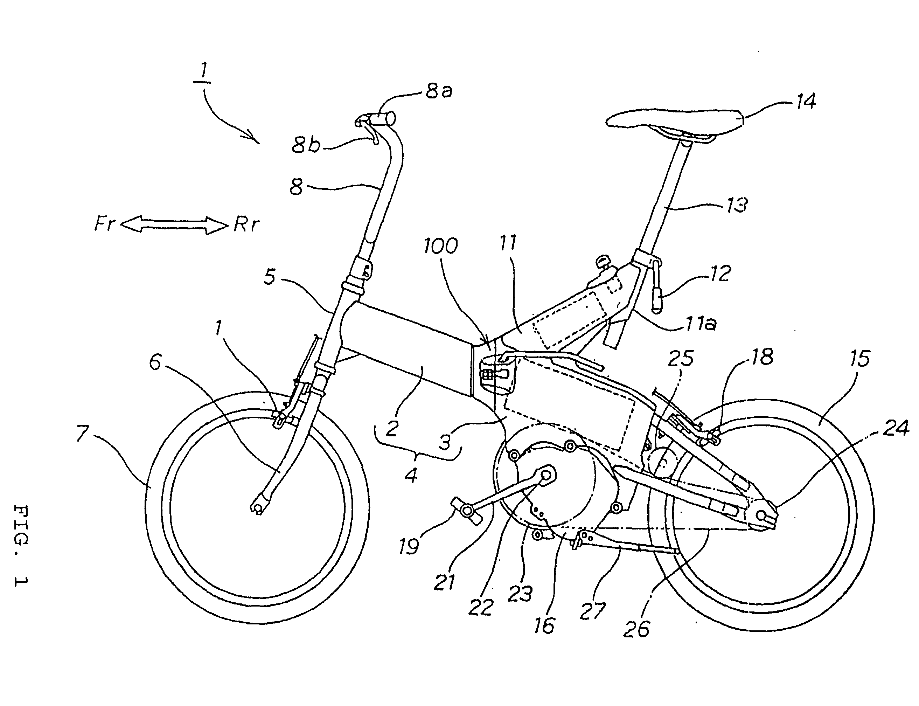

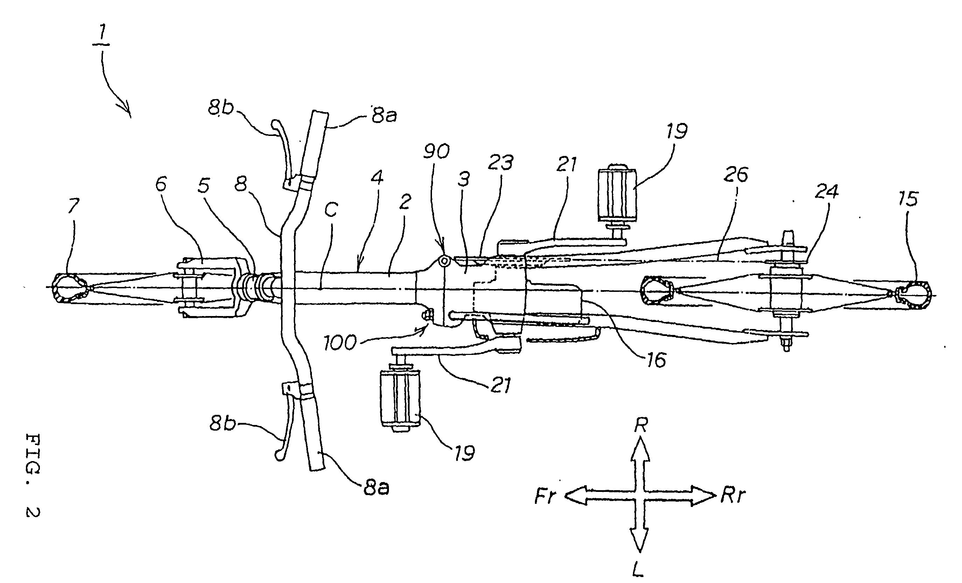

According to Fig.1 and Fig. 2 of the publication, the frame of the motor-assisted bicycle is a connected body comprising a front frame 3 (numerals described in the publication are cited, the same as follows) in a V-like shape in side view and a rear frame 4.

The front frame 3 is constituted by a main frame 3A falling from a head pipe 5 in a slanted rear direction, a bent intermediary portion 3B in continuation to a lower end of the main frame 3A and a seat frame 3C rising from the intermediary portion 3B in a slanted rear direction. The surrounding of the front frame 3 is covered with a body cover 16.

The main frame 3A is attached with a battery case assembly 30 and a lock device 70 having a main switch, the intermediary portion 3B is attached with a motor 18 and the seat frame 3C is attached with a control unit 100.

Further, according to Fig. 22 of the publication, the control unit 100 turns on a lamp L and urges charging when voltage of a battery source BAT is equal to or lower than a remaining amount determining voltage value.

In the meantime, in recent years, similar to a general foldable bicycle, it has been requested to carry a motor-assisted bicycle by folding it. For example, in making an excursion, it is preferable to fold a motor-assisted bicycle and carry it by mounting it on an automobile. Hence, it is conceivable to provide a foldable structure to the front frame 3 of the conventional motor-assisted bicycle 1.

However, according to the motor-assisted bicycle, the bicycle cannot be folded. Because electric parts are not arranged on a premise of folding the bicycle.

GB 2 270 053 A discloses a motor-assisted bicycle in accordance with the preamble of claim 1. There, the battery is arranged above the rear wheel. The motor is not shown.

It is an object of the invention to provide a motor-assisted bicycle of the generic type, wherein the wiring of the electric parts can be shortened, and wherein the bicycle has a good running stability and operational performance.

According to the invention, the object is achieved by a motor assisted bicycle having a motor for assisting manual power and a front frame foldably connected to a rear frame, the front frame supporting a front wheel and a handle, and the rear frame supporting a rear wheel, the motor, a battery and a seat support frame for attaching a seat post and a saddle characterized in that the battery and the motor are arranged at a lower portion of said rear frame and that a main switch and a control unit are attached to said seat support frame, wherein the motor is included in a power unit, and a stand is attached to a lower portion of the power unit.

The battery, the main switch and the control unit are at portions proximate to each other in the rear frame. Therefore, electric wires (harness) for connecting the battery, the main switch and the control unit can be arranged to concentrate in the rear frame. As a result, the wiring is shortened. Further, it is not necessary to arrange electric wires between the rear frame and the front frame and accordingly, when the frame is folded, they are not bent. Therefore, no bending force is caused in the electric wires and, therefore, the durability of the electric wires is promoted. As the battery and the motor are arranged at the lower part of the rear frame, the gravity center is lowered to enhance the running stability. As the main switch is attached to the seat support frame, the operational performance is promoted. The stand attached to the power unit allows the bicycle to stand stably.

Preferably, the control unit is arranged at a position lower than a position of the main switch.

If the control unit, which is a comparatively heavy article is arranged at a position lower than a position of the main switch, the gravity center of the motor-assisted bicycle is lowered further. As the main switch is arranged at a position higher than the position of the control unit, the operational performance is promoted.

An explanation will be given of embodiments of the present invention in reference to attached drawings as follows.
Fig. 1 is a side view of a motor-assisted bicycle according to the present invention.
Fig. 2 is a plane view of the motor-assisted bicycle according to the present invention.
Fig. 3 illustrates a disassembled perspective view of a body frame according to the present invention.
Fig. 4 is a side view of essential portions around a rear frame, a seat support frame and a power unit according to the present invention.
Fig. 5 illustrates constitution views of a battery unit according to the present invention.
Fig. 6 is a side sectional view showing a state where a battery unit is stored in a space portion of a rear frame according to the present invention.
Fig. 7 is a sectional view enlarging essential portions showing a relationship among a remaining amount display unit, a display button and a cover according to the present invention.
Fig. 8 is a disassembled perspective view showing a relationship between a battery unit and a battery guide according to the present invention.
Fig. 9 is a sectional view taken along a line 9-9 of Fig.6.
Fig. 10. is a side sectional view showing a state where a main switch and a control unit are attached to a seat support frame according to the present invention.
Fig. 11 is a sectional view taken along a line 11-11 of Fig. 10.
Fig. 12 is a sectional view taken along a line 12-12 of Fig. 10.
Fig. 13 is a disassembled perspective view of a hinge mechanism and a connecting mechanism according to the present invention
Fig. 14 is a side view of the connecting mechanism according to the present invention.
Fig. 15 is a plane sectional view of the hinge mechanism and the connecting mechanism according to the present invention.
Fig. 16 illustrates views showing the operation of the connecting mechanism according to the present invention.
Fig. 17 is a plane sectional view of the hinge mechanism and the connecting mechanism according to the present invention.
Fig. 18 is a view showing the operation of a structure of folding a front and a rear frame according to the present invention.
Fig. 19 is a view showing the operation of a motor-assisted bicycle according to the present invention.
Fig. 20 is a view showing the operation of the motor-assisted bicycle according to the present invention.

Incidentally, "front", "rear", "left", "right", "upper" and "lower" follow directions in view from a driver, notation Fr designates front side, notation Rr designates rear side, notation L designates left side and notation R designates right side. Further, the drawing is viewed from a direction of notation.

Fig. 1 is a side view of a motor-assisted bicycle according to the present invention.

A motor-assisted bicycle 1 is a foldable type bicycle where a front frame 2 and a rear frame 3 are foldably connected substantially at a center of the bicycle in the front and rear direction to thereby constitute a body frame (frame) 4.

The front frame 2 is rotatably attached with a front fork 6 at a head pipe 5 at its front end portion and a front wheel 7 and a handle 8 are attached to the front fork 6.

According to a structure around the rear frame 3, a seat support frame 11 extending in a rear upper direction is attached to a front end portion of the rear frame 3, a seat post 13 is attached to a seat post attaching portion 11a at a rear end portion of the seat support frame 11 extractably and retractactably in the up and the down direction and a saddle 14 is attached to an upper end portion of the seat post 13. Further, the rear frame 3 is attached with a rear wheel 15 at its rear end portion and a power unit 16 at its lower end portion.

In the drawing, notation 8a designates a grip, notation 8b designates a brake lever, numeral 12 designates a lever for adjusting the height of the seat post, numeral 17 designates a front brake, numeral 18 designates a rear brake, numeral 19 designates a pedal, numeral 21 designates a gear crank, numeral 22 designates a crank shaft, numeral 23 designates a drive sprocket, numeral 24 designates a driven sprocket, numeral 25 designates an idler, numeral 26 designates a chain and numeral 27 designates a stand.

Fig. 2 is a plane view of the motor-assisted bicycle according to the present invention. Incidentally, to facilitate understanding, the seat support frame 11, the seat post 13 and the saddle 14 are omitted.

According to the motor-assisted bicycle 1, on the right side (one side) of a body center C, a hinge mechanism 90 for folding the front frame 2 and the rear frame 3, the drive sprocket 23 , the driven sprocket 24 and the chain 26 are arranged and on the left side (other side) of the body center C, a connecting mechanism 100 for connecting the front frame 2 and the rear frame 3 is arranged.

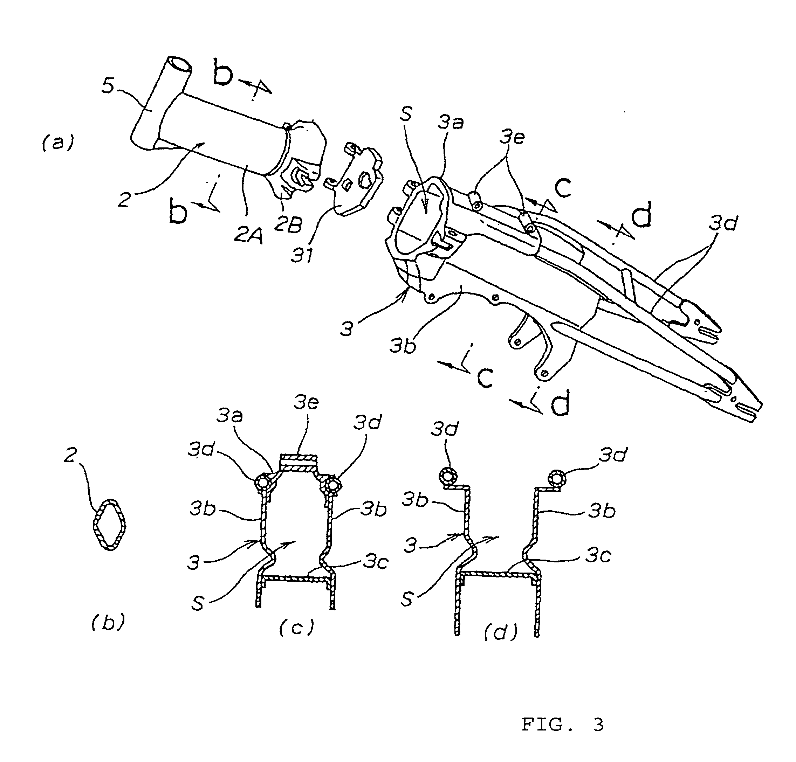

Figs. 3(a) through 3(d) show a disassembled perspective view of the vehicle frame according to the present invention in which Fig. 3 (a) shows a disassembled state, Fig.3(b) shows a section taken along a line b-b of Fig. 3(a), Fig.3(c) shows a section taken along a line c-c of Fig. 3(a) and Fig. 3(d) shows a section taken along a line d-d of Fig. 3(a).

As shown by Fig. 3(b), the front frame 2 is constituted by a pipe having a section in an elliptical shape

As shown by Figs. 3(a), 3(c) and 3(d), the rear frame 3 is constituted by a frame main body 3a substantially in an annular shape, left and right frame side plates 3b, a bottom plate 3c connecting lower end portions of the left and the right frame side plates 3b and left and right rear wheel support arms 3d extending from the rear portion of the frame main body 3a and the frame side plates 3b in the rearward direction. Further, as shown by Fig. 3(c), a space portion S surrounded by the frame main body 3a, the left and right frame side plates 3b and the bottom plate 3c constitute a battery storing space. As shown by Fig. 3(d), an upper rear portion of the space portion S is constituted to open. The frame main body 3a is integrally formed with two front and rear attaching bosses 3e and the attaching bosses 3e are for fastening the lower end portion of the seat support frame 11(refer to Fig. 1) by bolts.

The front and the rear frames 2 and 3 comprise a light alloy of an aluminum alloy or the like for weight reduction. For example, a front portion 2A of the front frame 2 comprises an extruded member of an aluminum alloy and a rear portion 2B of the front frame 2 comprises a casting of an aluminum alloy and the frame main body 3a comprises a casting of an aluminum alloy.

In the meantime, a front end of the rear frame 3 is closed by a lid 31. Details of the lid 31 will be mentioned later.

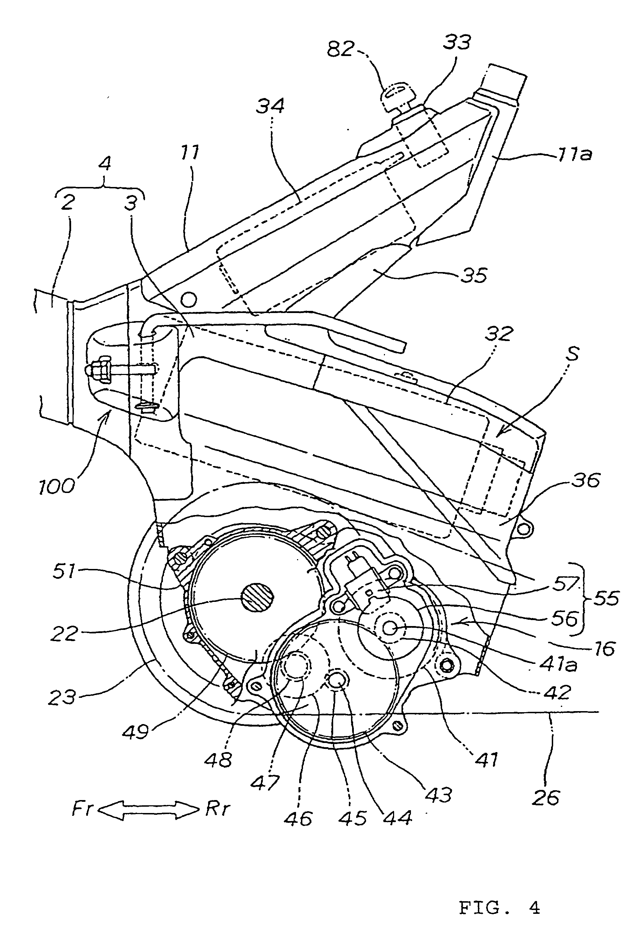

Fig. 4 is a side view of essential portions around the rear frame, the seat support frame and the power unit according the present invention where the section of the power unit 16 is shown.

The rear frame 3 is arranged with a battery unit 32 at its lower portion, the power unit 16 is arranged below the battery unit 32, and in the meantime, the seat support frame 11 is arranged with a main switch 33 at its upper portion and a control unit 34 is arranged below the main switch 33.

In detail, the battery unit 32 is attached to store in the space portion S of the rear frame 3, the main switch 33 is attached to the seat support frame 11 and the control unit 34 is attached to store at an inner portion of the seat support frame 11.

The rear upper portion of the rear frame 3 and the rear face of the seat support frame 11 are covered with a cover 35, details of which will be mentioned later. Further, the back face and the rear side faces of the rear frame 3 are covered with a rear cover 36 which are divided in the left and in the right.

The power unit 16 is provided with a motor 41 for assisting manual running as a drive source. In detail, the power unit 16 is constituted by the motor 41, a drive gear 42 attached to an output shaft 41a of the motor 41, a first intermediate gear 43 in mesh with the drive gear 42, a first intermediate shaft 44 for attaching the first intermediate gear 43, a second intermediate gear 45 integrally installed to the first intermediate shaft 44, a third intermediate gear 46 in mesh with the second intermediate gear 45, a second intermediate shaft 47 for connecting to the third intermediate gear 46 via a one-way clutch (not illustrated), a fourth intermediate gear 48 integrally installed to the second intermediate shaft 47, a driven gear 49 in mesh with the fourth intermediate gear 48, a rotating cylinder(not illustrated) for coupling the driven gear 49 with the drive sprocket 23 and a case 51.

In the meantime, the power unit 16 is provided with a vehicle speed detecting means 55. The vehicle speed detecting means 55 is constituted by a reluctor 56 attached to the output shaft 41a of the motor 41 and an electromagnetic pick up coil type sensor 57.

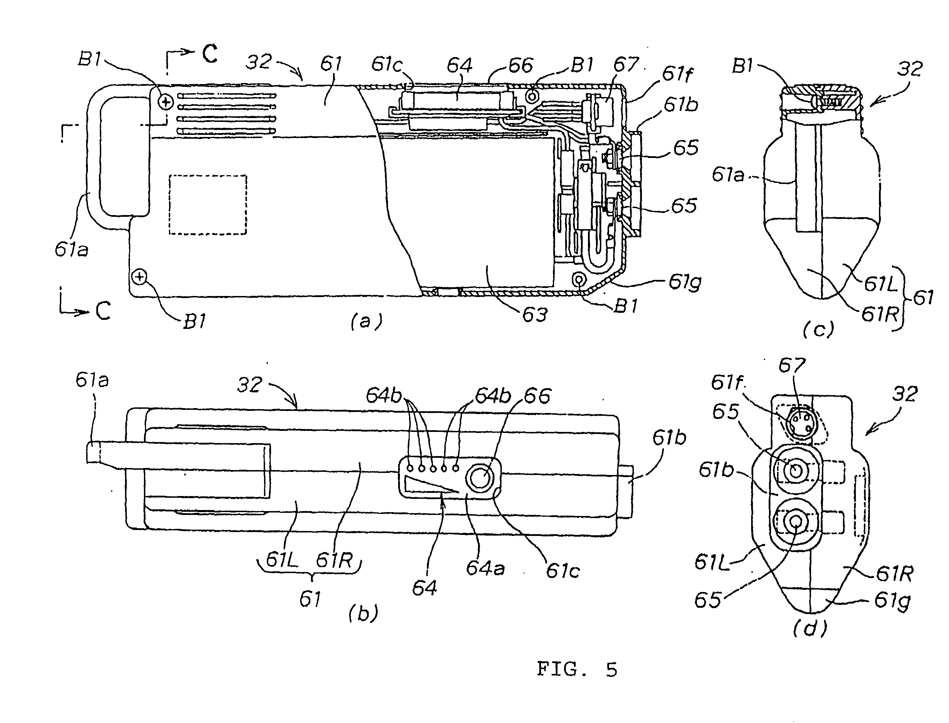

Figs. 5(a) through 5(d) are constitution views of the battery unit according to the present invention in which Fig.5 (a) shows a side face of the battery unit 32 where a portion thereof is cut, Fig. 5(b) is a plane view of the battery unit 32, Fig. 5(c) shows a section taken from a line c-c of Fig. 5(a) and Fig. 5(d) shows a back face of the battery unit 32.

According to the battery unit 32, a battery case 61 constituted by combining left and right case halves 61L and 61R and fastening them by screws B1...(...designates a plural number, the same as follows), incorporates a battery 63, a remaining amount display unit 64 and so on and attached with two outer terminals 65 and the like on its back face.

The battery case 61 is a case slender in the front and rear direction having a taper shape converging downwardly in front view as shown by Fig. 5(c), integrally formed with a handle 61a at a front face thereof, integrally formed with a connector 61b for outer terminals at a back face thereof and where a display window 61c is opened on an upper face thereof. The display window 61c is provided with a display face 64a of the remaining amount display unit 64 as well as a display button 66 as shown by Fig. 5(b)

The remaining amount display unit 64 is for displaying a remaining amount of the battery 63 and specifically, voltage of the battery 63 is displayed by turning on a plurality of light emitting diodes 64b... arranged in one row.

The display button 66 is a push button attached to the display face 64a of the remaining amount display unit 64 for displaying the remaining amount of the battery 63 and by pushing the push button, a switch, not illustrated, is turned on and the remaining amount display unit 64 is operated for a predetermined period of time. The remaining amount display unit 64 is operated for a predetermined period of time and therefore, power saving is achieved.

In the drawing, numeral 67 designates a charge terminal and notation 61f designates an opening for the charge terminal. Notation 61g designates a rear bottom taper face which is installed on a side opposed to the charge terminal 67 in the up and down direction.

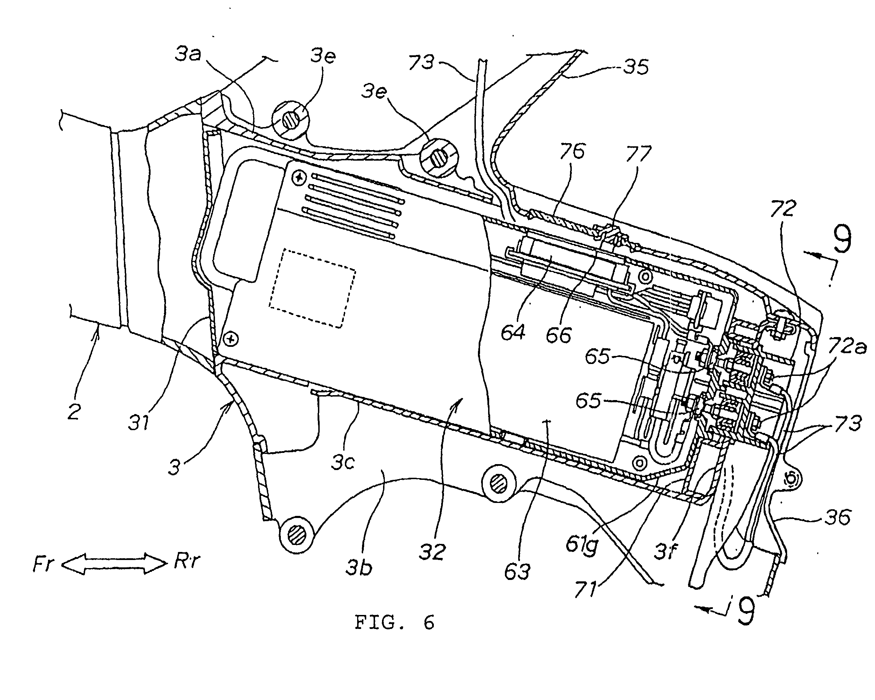

Fig. 6 is a side sectional view showing a state where the battery unit is stored in the space portion of the rear frame according the present invention in which the rear portion of the cover 35 is fastened by screws to the upper portion of an inner wall 3f forming the space portion S of the rear frame 3 and the upper side of the battery case 61 is covered with the cover 35.

The inner wall 3f is sandwiched by a battery guide 71 in the space portion S and an outer connector 72 outside of the space portion S. Contact pins 72a of the outer connector 72 are connected to first electric wires (harness) 73, led in the battery guide 71 and brought into contact with the outer terminals 65 of battery unit 32 stored in the space portion S.

Meanwhile, the battery unit 32 is provided with the rear lower taper face 61g at its rear lower portion as mentioned above. Therefore, when the battery unit 32 is inserted into the space portion S, the rear lower portion of the battery unit 32 is prevented from being bought into contact with the opening of the rear frame 3 and accordingly, the inserting operation is facilitated.

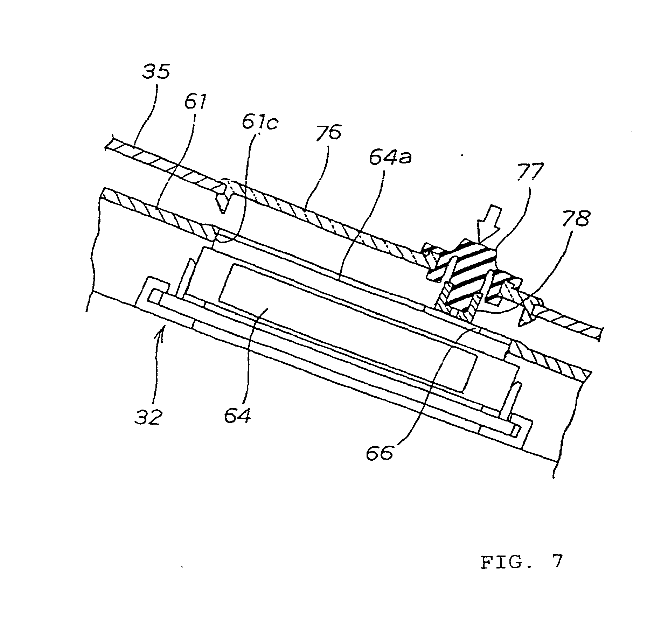

Fig. 7 is a sectional view enlarging essential portions showing a relationship among the remaining display unit, the display button and the cover according to the present invention and showing that a transparent plate 76 through which the remaining amount display unit 64 is viewed and an operating button 77 for pushing the display button 66 are attached to the cover 35.

Specifically, the cover 35 is attached with the transparent plate 76 facing the display face 64a of the remaining amount display unit 64 by elastic fitting and the transparent plate 76 comprises, for example, a transparent or an opaque resin plate or a glass plate. The operating button 77 comprises elastic material of rubber or the like and attached directly to the transparent plate by elastic fitting for pushing the upper face of the display button 66 via a collar 78.

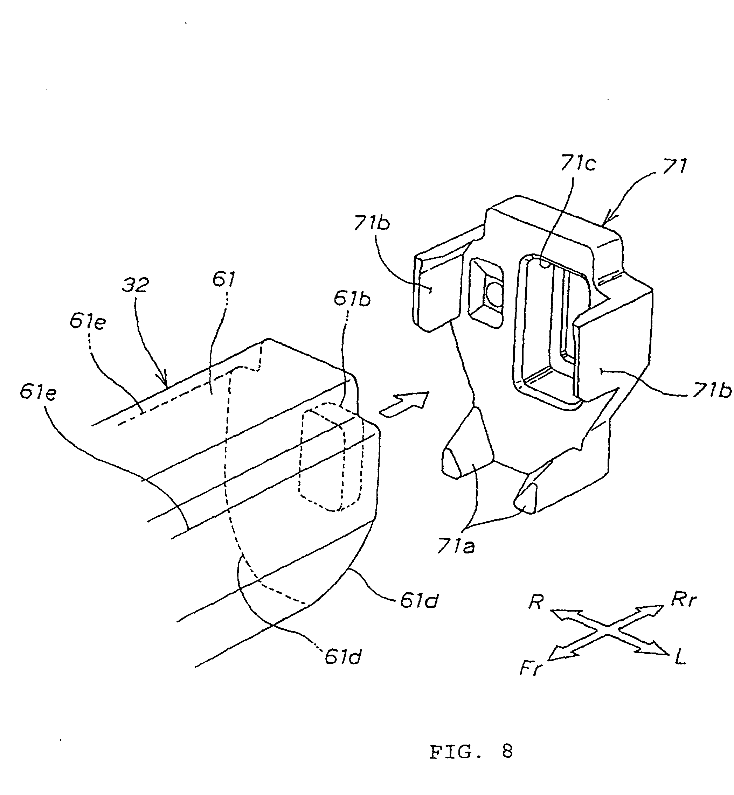

Fig. 8 is a disassembled perspective view showing a relationship between the battery unit and the battery guide according to the present invention.

The battery guide 71 is integrally formed with taper guide projections 71a for guiding lower taper faces 61d of the battery case 61 and shoulder guide projections 71b for guiding shoulder portions 61e of the battery case 61.

Therefore, the battery guide 71 guides the lower taper faces 61d and the shoulder portions 61e of the battery case 61 inserted into the space portion S (refer to Fig.6) by the taper guide projections 71a and the shoulder guide projections 71b and dispose them at predetermined positions in the space portion S. A connector 61b for outer terminals in the battery case 61, is fitted to a through hole 71c of the battery guide 71. Accordingly, by inserting the battery unit 32 into the space portion S, as shown by Fig. 6, the outer terminals 65 are automatically positioned to the outer connector 72 and can be brought into contact with the contact pins 72a.

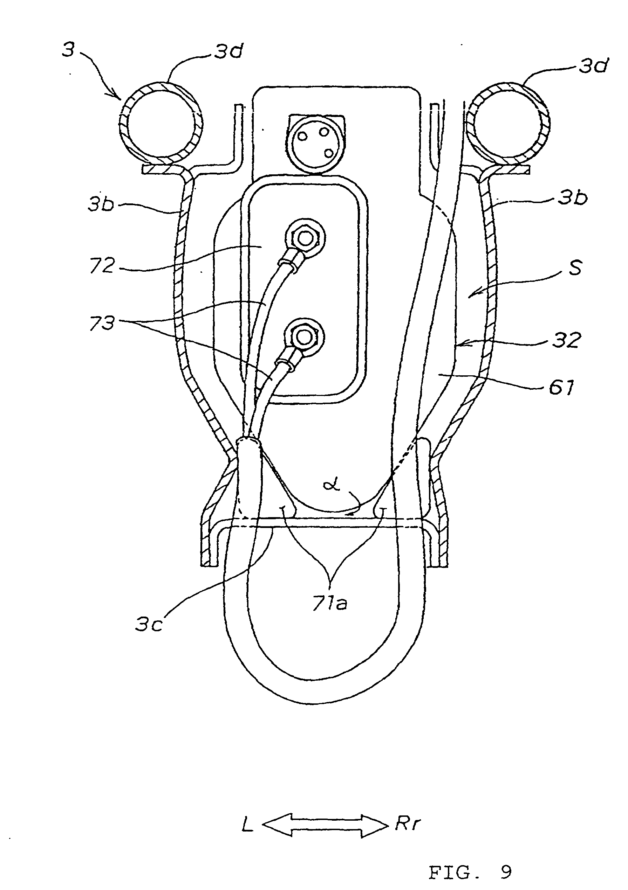

Fig. 9 is a sectional view taken along a line 9-9 of Fig. 6. Incidentally, to facilitate understanding, the inner wall 3f of the rear frame 3, the cover 35 and the battery guide 71 shown in Fig. 6 are omitted.

The drawing shows the battery unit 32 in a state where it is finished to be stored to the space portion S, is positioned by the taper guide projections 71a.

The battery case 61 is arranged to produce a gap α in respect of the bottom plate 3c. Therefore, the lower face of the battery case 61 and the bottom plate 3c do not interfere with and rub each other.

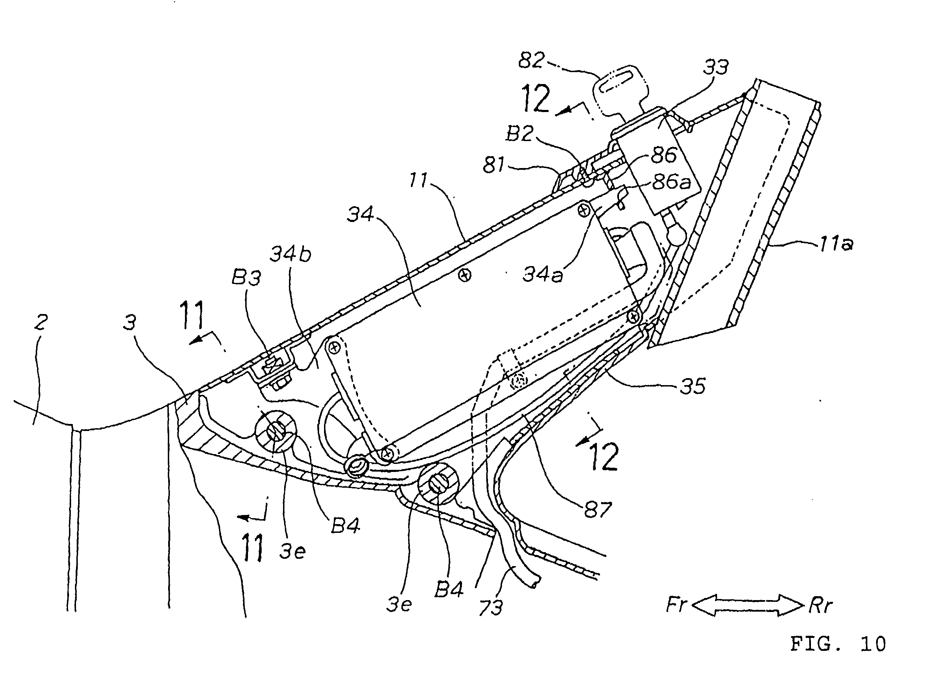

Fig. 10 shows a side sectional view showing a state where the main switch and the control unit are attached to the seat support frame according to the present invention and showing details of the attaching structure.

According to the specific attaching structure of the main switch 33, a switch attaching plate 81 is attached at the upper portion of the front face of the seat support frame 11 by elastic engagement and screws B2 and the main switch 33 is attached to the switch attaching plate 81. The main switch 33 is a key switch pivotably operated by inserting a key 82 designated by imaginary lines to a key hole for turning on and off operation of the control unit 34.

In the meantime, according to the specific attaching structure of the control unit 34, a stopper plate 86 is attached at the upper portion of the seat support frame 11, a stopper flange 34a at one end of the control unit 34 is engaged with a hole 86a of the stopper plate 86 and a stay 34b at other end of the control unit 34 is attached to the upper portion of the seat support frame 11 by a bolt B3. The control unit 34 controls to generate auxiliary power in accordance with force for stepping on the pedals 19 (refer to Fig. 1) in the motor 41 (refer to Fig. 4).

The main switch 33 and the control unit 34 are connected by a second electric wire (harness) 87 and the control unit 34 and the battery unit 32 of Fig. 6 are connected by a first electric wire 73.

The battery unit 32, the main switch 33 and the control unit 34 are at positions contiguous to each other and therefore, the first and the second electric wires 73 and 88 are extremely short.

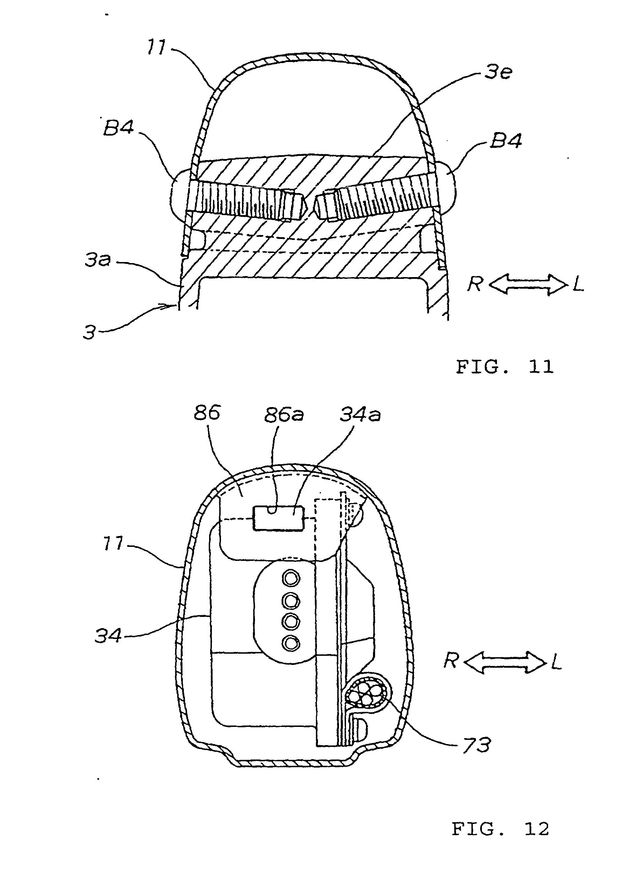

Fig. 11 is a sectional view taken along a line 11-11 of Fig. 10 showing that the lower end portion of the seat support frame 11 is attached to the attaching bosses 3e of the rear frame 3 by bolts B4.

Fig.12 is a sectional view taken along a line 12-12 of Fig. 10 showing a state where the stopper flange 34a of the control unit 34 is engaged with the hole 86a of the stopper plate 86.

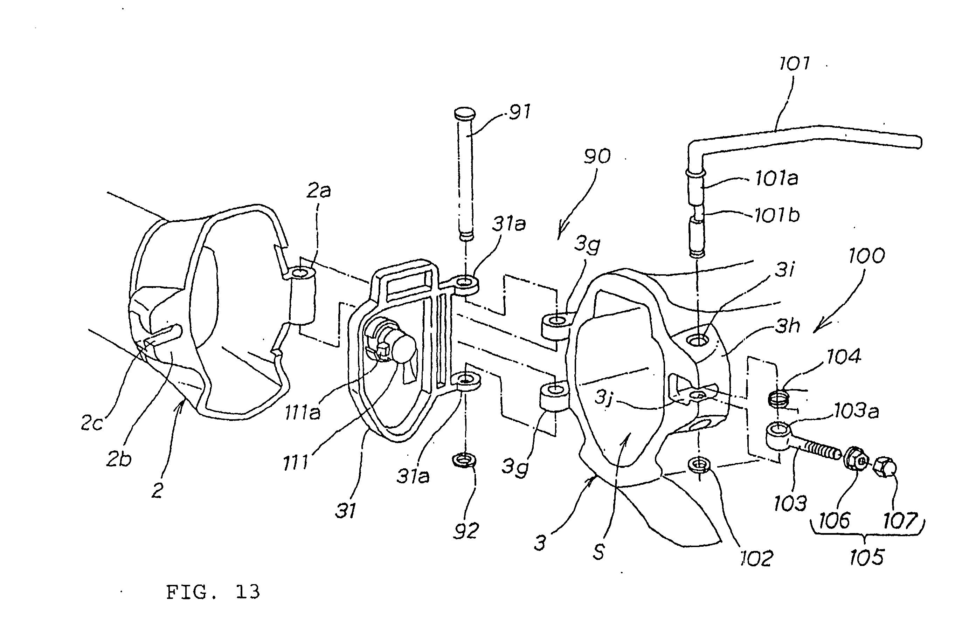

Fig. 13 is a disassembled perspective view of the hinge mechanism and the connecting mechanism according to the present invention.

The hinge mechanism 90 is constituted by a hinge stay 2a formed at the right side portion of the rear end of the front frame 2, hinge stays 3g formed at the right side portion of the front end of the rear frame 3, hinge stays 31a formed in the lid 31, a flanged hinge pin 91 inserted into respective holes of the hinge stays 2a, 3g, and 31a and a stopper ring 92 engaged to the lower end portion of the flanged hinge pin 91.

The connecting mechanism 100 is constituted by a boss 3h formed at the left side portion of the front end of the rear frame 3, upper and lower holes 3i as well as a notch groove 3j formed by notching forwardly from a midway of the upper and lower through holes 3i both of which are formed in the boss 3h, a locking lever 101 in an inverse L-like shape in side view penetrating the upper and lower through holes 3i, a stopper ring 102 engaged to the lower end portion of the locking lever 101, a bolt 103 with a fitting hole as well as a torsional spring 104 both of which are fitted to the locking lever 101 in the notch groove 3j, double nuts 105 (nut 106 and box nut 107) screwed to the bolt 103 with a fitting hole, a flange 2b as well as a bolt engaging groove 2c formed at the flange 2b both of which are formed at the left side portion of the rear end front frame 2.

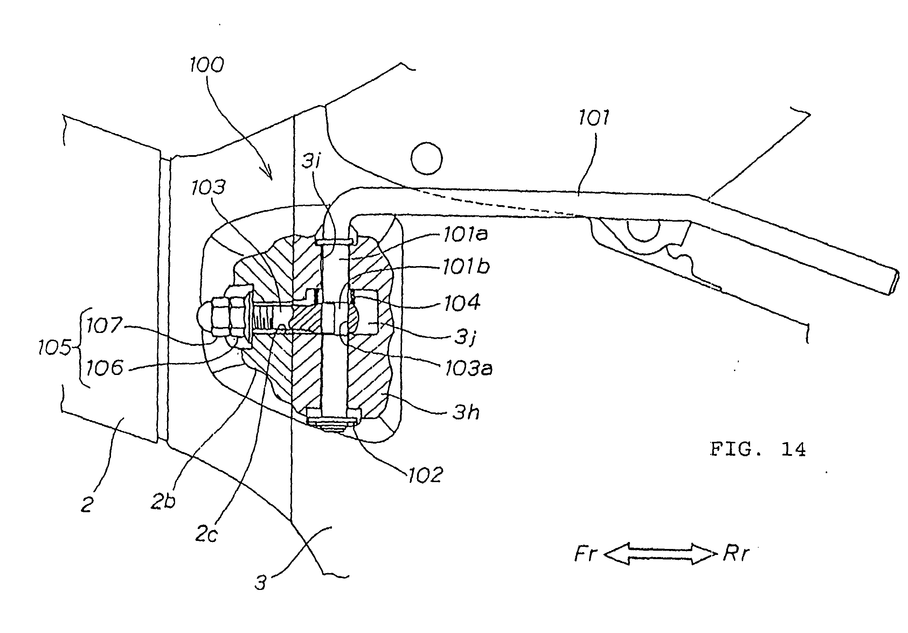

Fig. 14 is a side view of the connecting mechanism according to the present invention showing essential portions of the connecting mechanism 100 in a connected state.

The locking lever 101 is formed with an eccentric cam 101b at a midway of a shaft portion 101a inserted into the upper and lower through holes 3i and the cam 101b is fitted to a fitting hole 103a of the bolt 103 with a fitting hole. The bolt 103 with a fitting hole connects the front frame 2 with the rear frame 3 by being inserted into the bolt engaging groove 2c and by engaging the double nuts 105 screwed to the front end with the flange 2b.

The screwed depth of the double nuts 105 in respect of the bolt 103 with a fitting hole is provided with a dimension suitable for connecting the front frame 2 with the rear frame 3 and is previously set.

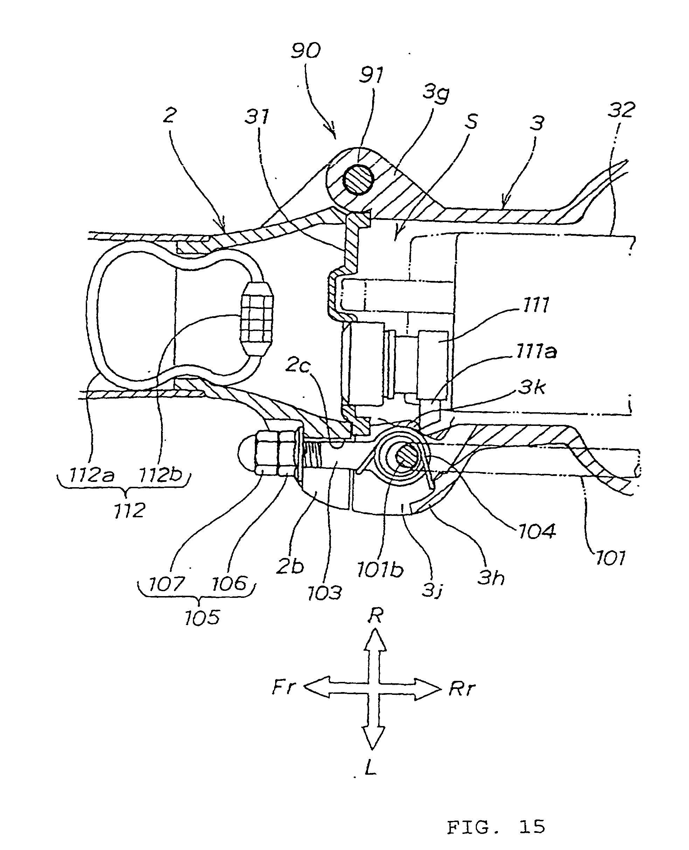

Fig. 15 is a plane sectional view of the hinge mechanism and the connecting mechanism according to the present invention showing that the battery unit 32 designated by imaginary lines is stored to the space S of the rear frame 3, the lid 31 is closed, a key cylinder (lock device) 111 is locked and the connecting mechanism 100 is connected.

According to the key cylinder 111 attached to the lid 31, by pivotably operating a key, not illustrated, by inserting it into a key hole, a lock pin 111a is locked to a projection 3k in the rear frame 3. The key cylinder 111 serves for prevention of robbery of the battery unit 32.

The torsional spring 104 of the connecting mechanism 100 urges the bolt 103 with a fitting hole always in a direction of engaging with the flange 2b of the front frame 2. Therefore, the front frame 2 and the rear frame 3 can be maintained always in a stable connecting state.

In the meantime, the rear end of the front frame 2 is opened and is capable of storing a wire lock 112 at inside thereof.

The wire lock 112 is a lock member engaged with the front wheel 7 or the rear wheel 15 for prevention of robbery and is combined with a wire 112a in a hoop-like shape and a lock 112b of a dial type. When the wire 112a is pushed into the front frame 2, the wire 112a is brought into press contact with the inner face of the front frame 2 by its own recovery force and is prevented from being drawn out. In this way, the inner space of the front frame 2 can effectively be utilized.

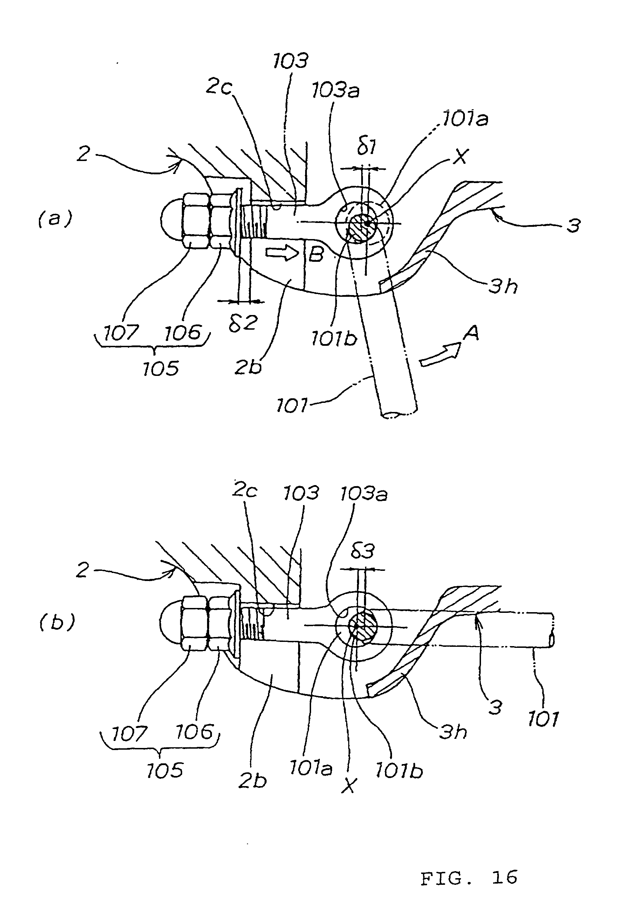

Figs. 16(a) and 16(b) are views showing the operation of the connecting mechanism according to the present invention in which Fig. 16(a) shows a state before connection and Fig. 6(b) shows a state after connection.

Fig. 16(a) shows a state where the rear end of the front frame 2 and the front end of the rear frame 3 are aligned with each other and the bolt 103 with a fitting hole is inserted into the bolt engaging groove 2c. In this case, the locking lever 101 is at a position where it is erected as shown by imaginary lines. Accordingly, the cam 101b is in a state where it is eccentric to the side of the front frame 2 from a center X of the shaft portion 101a by a dimension δ 1. In the meantime, a gap between the back face of the flange 2b and the double nut 105 is δ 2.

When the locking lever 101 is fallen by turning it in a direction of a white arrow mark A from the state, the cam 101b is also turned in the same direction. The bolt 103 with a fitting hole is pulled by the turned cam 101b and is moved in a direction of a white arrow mark B.

When the locking lever 101 is at a position where it is fallen as shown by imaginary lines as illustrated by Fig. 16(b), the cam 101b is brought into a state where it is eccentric to the side opposed to the front frame 2 from the center X of the shaft portion 101a by a dimension δ 3. There is no gap between the back face of the flange 2b and the double nuts 105 since the bolt 103 with a fitting hole is pulled by the cam 101b. In this way, the bolt 103 with a fitting hole connects the rear end of the front frame 2 with the front end of the rear frame 3 by pulling the flange 2b to the front end of the rear frame 3 via the double nuts 105.

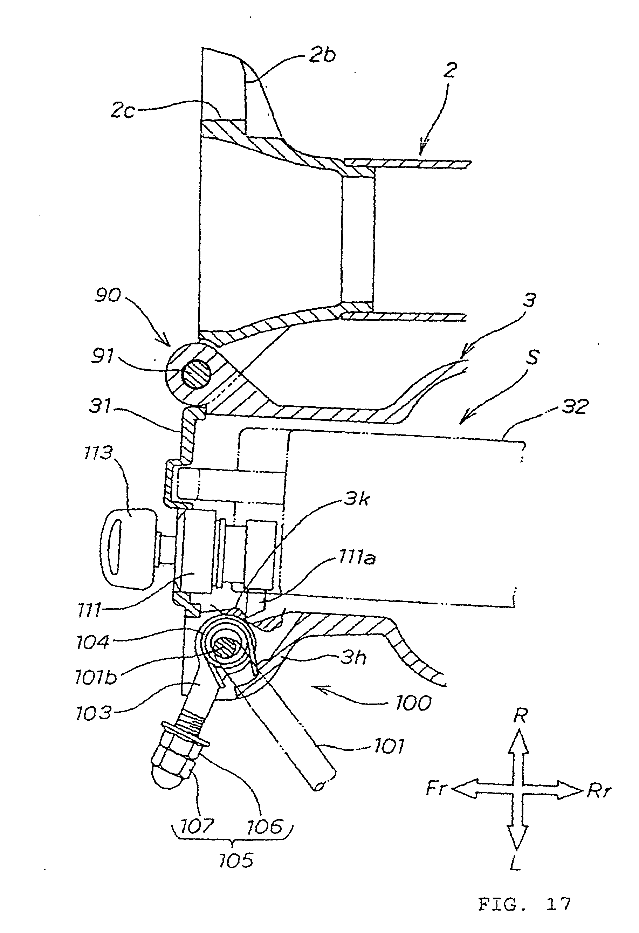

The Fig. 17 is a plane sectional view of the hinge mechanism and the connecting mechanism according to the present invention showing a state where the front frame 2 is fallen by releasing the connecting mechanism 100. When the key cylinder 111 is unlocked by a key 113 in this state, the battery unit 32 designated by imaginary lines can be interchanged by opening the lid 31.

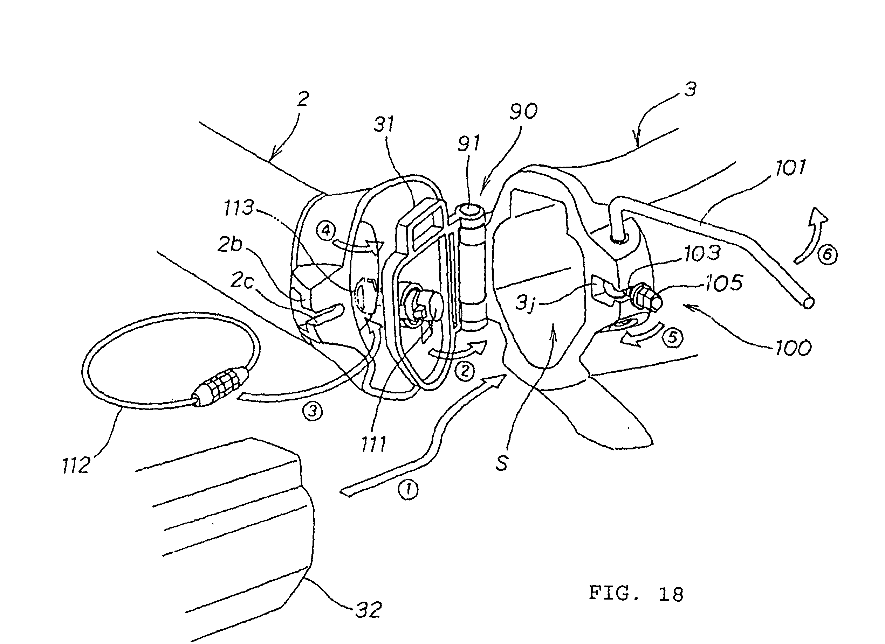

Fig. 18 is a view showing the operation of a structure of folding the front and the rear frames according to the present invention.

The battery unit 32 is stored and the front frame 2 and the rear frame 3 are connected by the following operational procedure.

First, the battery unit 32 is inserted into the space portion S of the rear frame 3 (arrow mark(1)), the lid 31 is closed and the key cylinder 111 is locked (arrow mark (2)), the wire lock 112 is stored into the front frame 2 as necessary (arrow mark (3)), the rear end of the front frame 2 is aligned with the front end of the rear frame 3 (arrow mark (4)), the bolt 103 with a fitting hole is inserted into the bolt engaging groove 2c of the flange 2b (arrow mark (5)), the locking lever 101 is fallen and the bolt 103 with a fitting hole is engaged with the flange 2b (arrow mark (6)) and the rear end of the front frame 2 is connected with the front end of the rear frame 3.

In taking out the battery unit 32, a procedure reverse to the above-described operational procedure is carried out.

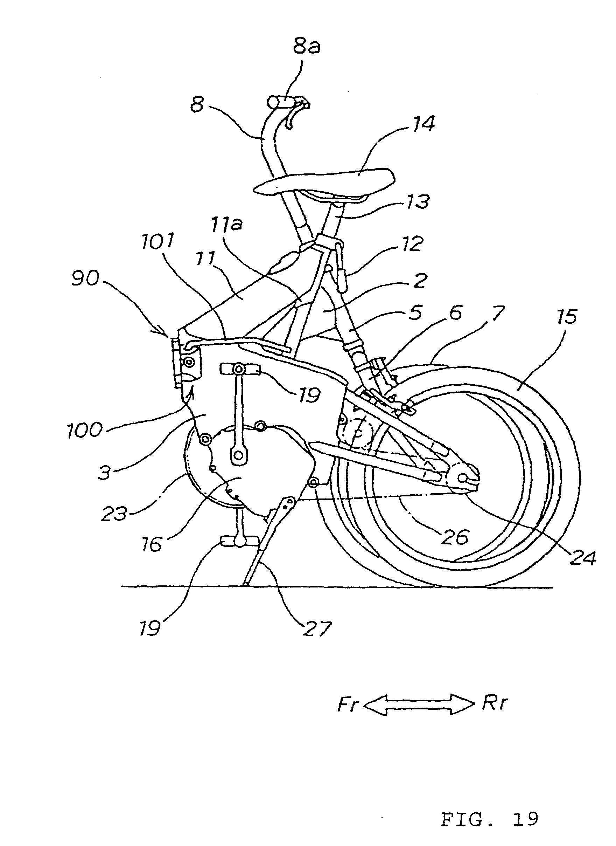

Fig. 19 is a view showing the operation of the motor-assisted bicycle according to the present invention showing a structure of the motor-assisted bicycle 1 in the folded state by viewing it from a side face thereof.

The connecting mechanism 100 is released and the front frame 2 is folded to the right side (direction to rear face of the drawing) by which the motor-assisted bicycle 1 is provided with substantially a half length. The motor-assisted bicycle 1 in this state can be erected by the rear wheel 15 and the stand 27. Further, the saddle 14 may be lowered as shown by the drawing.

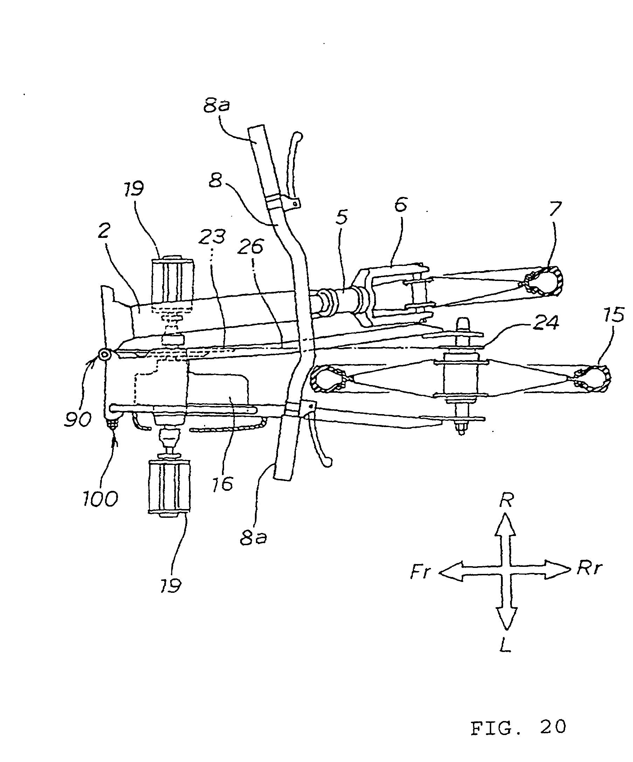

Fig. 20 is a view showing the operation of the motor-assisted bicycle according to the present invention showing the structure of the motor-assisted bicycle 1 in the folded state in plane view. Further, to facilitate understanding, the seat support frame 11, the seat post 13 and the saddle 14 shown by Fig. 19 are omitted.

The drive sprocket 23, the driven sprocket 24, the chain 26 and the hinge mechanism 90 are arranged concentratingly on the right side (one side) from the body center and therefore, when a person folding the motor-assisted bicycle 1 carries out the folding operation while standing on the left side (other side) of the body, the chain 26 or the like does not constitute any hindrance. Therefore, the folding operation is facilitated. Further, the chain 26 can be guarded by the front frame 2, the front fork 5 and the front wheel 7 in a folded state and accordingly, no member for guarding the chain under the state is needed.

In a motor-assisted bicycle having a motor 41 for assisting manual power, a front frame 2 having a front wheel and a handle and a rear frame 3 having a rear wheel, a seat support frame 11 for attaching a seat post and a saddle, are foldably connected, a battery unit 32 is arranged at a lower portion of the rear frame, a main switch 33 is attached to the seat support frame and a control unit 34 is incorporated at an inner portion of the seat support frame.

The battery, the main switch and the control unit are at positions proximate to each other in the rear frame and accordingly, electric wires for connecting the battery, the main switch and the control unit can be arranged concentratingly in the rear frame. Therefore, the wiring is shortened. Furthermore, the electric wires need not to arrange between the rear frame and the front frame and accordingly, they are not bent when the frames are folded.

## Claims

1. A motor-assisted bicycle having a motor (41) for assisting manual power and a front frame (2) foldably connected to a rear frame (3), the front frame (2) supporting a front wheel (7) and a handle (8), and the rear frame (3) supporting a rear wheel (15), the motor (41), a battery (63) and a seat support frame (11) for attaching a seat post (13) and a saddle (14),
**characterized in that** the battery (63) and the motor (41) are arranged at a lower portion of said rear frame (3) and that a main switch (33) and a control unit (34) are attached to said seat support frame (11), wherein the motor (41) is included in a power unit (16), and a stand (27) is attached to a lower portion of the power unit (16).

2. The motor-assisted bicycle according to claim 1, wherein the control unit (34) is arranged at a position lower than a position of the main switch (33).

3. The motor-assisted bicycle according to claim 1 or 2, wherein the control unit (34) is incorporated at an inner portion of the seat support frame (11).

4. The motor-assisted bicycle according to claim 1, wherein the long side of the battery (63) is arranged along the front-back direction of the vehicle and the motor (41) is arranged just below the battery (63).

## Patentansprüche

1. Motorunterstütztes Fahrrad mit einem Motor (41) zum Unterstützen von Muskelkraft und einem vorderen Rahmen (2), der mit einem hinteren Rahmen (3) faltbar verbunden ist, wobei der vordere Rahmen (2) ein Vorderrad (7) und einen Lenker (8) trägt, und der hintere Rahmen (3) ein Hinterrad (15), den Motor (41), eine Batterie (63) und einen Sitztragrahmen (11) zum Anbringen einer Sitzsäule (13) und eines Sattels (14) trägt,
**dadurch gekennzeichnet, dass** die Batterie (63) und der Motor (41) an einem unteren Abschnitt des hinteren Rahmens (3) angeordnet sind und dass ein Hauptschalter (33) und eine Steuereinheit (34) an dem Sitztragrahmen (11) angebracht sind, wobei der Motor (41) in einer Antriebseinheit (16) enthalten ist und ein Ständer (27) an einem unteren Abschnitt der Antriebseinheit (16) angebracht ist.

2. Motorunterstütztes Fahrrad nach Anspruch 1, worin die Steuereinheit (34) an einer tieferen Position angeordnet ist als eine Position des Hauptschalters (33).

3. Motorunterstütztes Fahrrad nach Anspruch 1 oder 2, worin die Steuereinheit (34) in einen Innenabschnitt des Sitztragrahmens (4) eingebaut ist.

4. Motorunterstütztes Fahrrad nach Anspruch 1, worin die lange Seite der Batterie (63) entlang der Längsrichtung des Fahrzeugs angeordnet ist und der Motor (41) direkt unter der Batterie (63) angeordnet ist.

## Revendications

1. Bicyclette à assistance motorisée ayant un moteur (41) pour assister une puissance manuelle et un cadre avant (2) relié de manière pliable à un cadre arrière (3), le cadre avant (2) supportant une roue avant (7) et une poignée (8), et le cadre arrière (3) supportant une roue arrière (15), le moteur (41), une batterie (63) et un cadre de support de selle (11) pour relier un tube de selle (13) et une selle (14),
**caractérisée en ce que** la batterie (63) et le moteur (41) sont agencés sur une partie inférieure dudit cadre arrière (3) et qu'un interrupteur principal (33) et une unité de commande (34) sont reliés audit cadre de support de selle (11), dans laquelle le moteur (41) est inclus dans un groupe moteur (16), et une béquille (27) est reliée à une partie inférieure du groupe moteur (16).

2. Bicyclette à assistance motorisée selon la revendication 1, dans laquelle l'unité de commande (34) est agencée sur une position plus basse que la position de l'interrupteur principal (33).

3. Bicyclette à assistance motorisée selon la revendication 1 ou 2, dans laquelle l'unité de commande (34) est incorporée sur une partie intérieure du cadre de support de selle (11).

4. Bicyclette à assistance motorisée selon la revendication 1, dans laquelle le long côté de la batterie (63) est agencé le long de la direction avant-arrière du véhicule et le moteur (41) est agencé juste au-dessous de la batterie (63).
